# EUROPÄISCHE PATENTSCHRIFT

(11) **EP 0 941 193 B1**
(45) Veröffentlichungstag und Bekanntmachung des Hinweises auf die Patenterteilung: **05.11.2003**
(21) Anmeldenummer: 97952853.6
(22) Anmeldetag: 02.12.1997
(51) Int. Cl.: B62D 5/06, F16F 9/52

(54) **HYDRAULISCHE SERVOLENKUNG**
HYDRAULIC POWER-ASSISTED STEERING
DIRECTION ASSISTEE HYDRAULIQUE

(30) Priorität: 05.12.1996 DE 19650476
(43) Veröffentlichungstag der Anmeldung: 15.09.1999
(73) Patentinhaber: DaimlerChrysler AG, 70567 Stuttgart (DE)
(72) Erfinder: ASBRAND, Ulrich, D-73630 Remshalden (DE); CLASS, Jürgen, D-75428 Illingen (DE)
(86) Internationale Anmeldenummer: EP9706737
(87) Internationale Veröffentlichungsnummer: WO98024677

(56) Entgegenhaltungen:
- WO-A-91/03664
- DE-A- 4 423 658
- PATENT ABSTRACTS OF JAPAN vol. 009, no. 092 (M-373), 20.April 1985 -& JP 59 217026 A (SHIYOUWA SEISAKUSHO:KK), 7.Dezember 1984,

## Beschreibung

Die Erfindung betrifft eine hydraulische Servolenkung der im Oberbegriff des Patentanspruchs 1 genannten Art, wie sie beispielsweise aus der DE 44 23 658 A1 bekannt ist.

Heutige Kraftfahrzeuge sind regelmäßig mit einer Servolenkung ausgerüstet, die zumindest im Falle von Personenkraftwagen typischerweise mit hydraulischer Hilfskraft arbeitet, derart, dass die vom Fahrer bei Betätigung der Fahrzeuglenkung aufzubringenden Kräfte immer hinreichend gering gehalten werden.

Um im Lenksystem Schwingungen weitestgehend zu vermeiden bzw. zu unterdrücken, besitzen praktisch alle Fahrzeuglenkungen einen Lenkungsdämpfer.

Aus der DE 43 23 179 C1 ist eine Servolenkung der eingangs angegebenen Art bekannt. Dort ist im Drosselventil ein Kolben zwischen zwei Widerlagerscheiben axial eingespannt, der Axialbohrungen aufweist, deren Öffnungen zumindest teilweise an beiden Stirnseiten des Kolbens durch Ventilplatten abgedeckt sind. Zwischen den Ventilplatten und den Widerlagern wirkt jeweils eine Kegelspiralfeder, die die Ventilplatten gegen die jeweilige Stirnseite des Kolbens drückt.

Ein Drosselventil mit ähnlicher Anordnung ist auch aus der DE 44 23 658 A1 bekannt.

Aus der DE 36 05 207 A1 ist ein als Kolben-Zylinder-Aggregat ausgebildeter hydraulischer Schwingungsdämpfer bekannt, bei dem ein Kolbenarbeitsraum über ein Bodenventil mit einem Ausgleichsraum verbunden ist. Das Bodenventil ist als Dämpferventilanordnung ausgebildet, welche ein kreisscheibenförmiges Trägerteil mit Axialbohrungen und einem zentralen Bolzen aufweist, der einerseits kreisscheibenförmige Federplatten zur Steuerung eines Teils der Axialbohrungen haltert und andererseits, auf der von den Federplatten abgewandten Seite des Trägerteils, eine Ringscheibe zur Steuerung des anderen Teils der Axialbohrungen führt. Im Bolzen ist ein Axialkanal ausgebildet, welcher temperaturabhängig von einer Bimetallfeder gesteuert wird, die ihrerseits an bolzenseitigen Halterungen gelagert ist.

Die DE 42 18 608 A1 offenbart einen hydraulischen Dämpfer, dessen Überströmkanäle mit Bi-Metall-Elementen versehen sind, die, abhängig von der Temperatur den Querschnitt der Überströmkanäle verändern.

Aufgabe der Erfindung ist es nun, eine Servolenkung der eingangs angegebenen Art noch weiter zu verbessern und insbesondere das Betriebsverhalten an unterschiedliche Außeneinflüsse anzupassen.

Diese Aufgabe wird erfindungsgemäß von einer Servolenkung mit den Merkmalen des Anspruchs 1 gelöst.

Die Erfindung beruht auf dem allgemeinen Gedanken, den Drosselwiderstand und damit die Dämpferwirkung der Dämpferventilanordnung temperaturabhängig zu steuern, um eine Anpassung an die temperaturabhängige Viskosität des Hydraulikmediums zu erreichen. Bei sehr niedriger Temperatur wird das Hydraulikmedium deutlich zähflüssiger, mit der Folge, dass das Hydraulikmedium weniger leicht durch die Dämpferventilanordnungen hindurchströmen kann. Dieser Effekt wird nun erfindungsgemäß dadurch weitestgehend kompensiert, dass bei niedriger Temperatur eine Entdrosselung der Dämpferventilanordnungen erfolgt.

Die temperaturabhängig arbeitenden Federanordnungen können Federn aus einer Formgedächtnis-Legierung und/oder Bimetallfedern aufweisen. Bei den Federn aus Formgedächtnis-Legierung ändert sich das Federverhalten sprunghaft, wenn ein schmaler Sprungtemperaturbereich über- bzw. unterschritten wird. Bimetallfedern können ihr Verhalten in einem großen Temperaturbereich vergleichsweise "schleichend" ändern bzw. bei einem Temperaturschwellwert "umschnappen". Durch entsprechende Auswahl bzw. Kombination der Federelemente kann eine optimale Anpassung an die Viskositätsänderungen des Hydraulikmediums erreicht werden.

Die Erfindung hat insbesondere in sehr kalten Klimazonen hohe Bedeutung. Bei längerer Geradeausfahrt des Fahrzeuges erfolgt am Servomotor keinerlei Zu- oder Abfluss von Hydraulikmedium. Da der Servomotor dem Fahrtwind und/oder Spritzwasser ausgesetzt ist, bleibt dann das Hydraulikmedium sehr kalt und zähflüssig mit der Folge, dass jede Hydraulikströmung nur gegen einen deutlich erhöhten Strömungswiderstand erfolgen und die Lenkung schwergängig werden kann. Diese negativen Effekte werden durch die Erfindung vermieden.

Im übrigen wird hinsichtlich bevorzugter Merkmale der Erfindung auf die Ansprüche sowie die nachfolgende Erläuterung vorteilhafter Ausführungsformen verwiesen, die anhand der Zeichnung beschrieben werden.

Dabei zeigt
- Fig. 1: eine schaltplanartig schematisierte Darstellung einer hydraulischen Servolenkung mit Dämpferventilen am Servomotor,
- Fig. 2: ein Schnittbild einer ersten Ausführungsform eines temperaturabhängig arbeitenden Dämpferventils,
- Fig. 3: ein Schnittbild einer abgewandelten Ausführungsform,
- Fig. 4: ein Schnittbild einer weiteren Variante,
- Fig. 5: eine Ausführungsform, bei der die Dämpferventile im Gehäuse des Servoventils angeordnet sind.

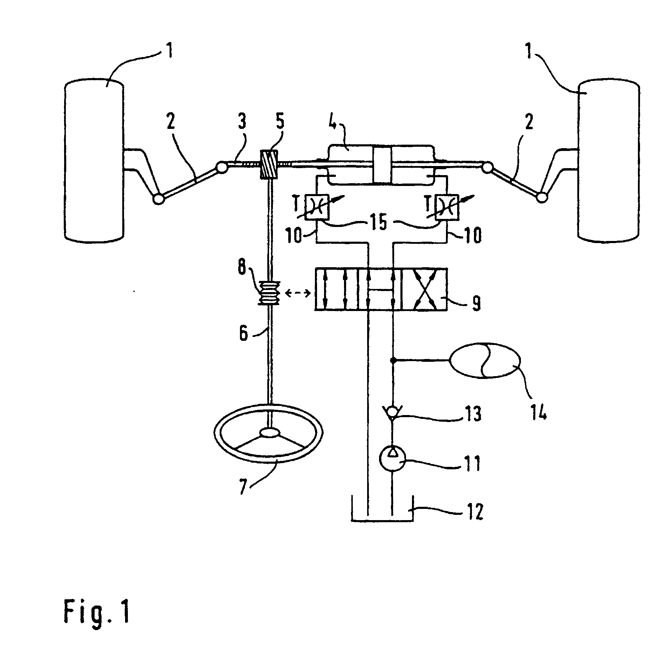

Gemäß Fig. 1 besitzt ein nicht näher dargestelltes Kraftfahrzeug vordere Fahrzeuglenkräder 1, die im dargestellten Beispiel über Spurstangen 2 mit einer Zahnstange 3 verbunden sind, welche gleichachsig in die Kolbenstange eines als Servomotor angeordneten doppeltwirkenden Kolben-Zylinder-Aggregates 4 übergeht bzw. mit der Kolbenstange verbunden ist.

Die Zahnstange 3 kämmt mit einem Ritzel 5, welches über eine Lenksäule 6 mit einem Lenkhandrad 7 antriebsmäßig verbunden ist. In der Lenksäule 6 ist ein drehelastisches Element 8 angeordnet, so dass zwischen Ritzel 5 und Lenkhandrad 7 eine begrenzte Relativdrehung auftreten kann, deren Maß von den zwischen Ritzel 5 und Lenkhandrad 7 übertragenen Kräften und Momenten abhängig ist.

Diese Relativdrehung steuert ein Servoventil 9, welches über Motorleitungen 10 mit den beiden Kammern des Kolben-Zylinder-Aggregates 4 und andererseits mit der Druckseite einer Hydraulikpumpe 11 sowie einem relativ drucklosen Hydraulikreservoir 12 verbunden ist, an das die Saugseite der Pumpe 11 angeschlossen ist.

In der dargestellten Mittellage des Servoventils 9 sind die beiden Kammern des Kolben-Zylinder-Aggregates 4 miteinander sowie mit dem Reservoir 12 verbunden. Außerdem kann eine Verbindung zur Druckseite der Pumpe 11 bestehen, welche dann ständig laufen kann.

Statt dessen ist es auch möglich, dass in der Mittelstellung des Servoventils 9 der Ventilanschluss zur Druckseite der Pumpe 11 abgesperrt ist, welche in diesem Falle über ein Rückschlagventil 13 einen Druckspeicher 14 laden kann und in Abhängigkeit vom Ladedruck gesteuert bzw. bei hohem Ladedruck ausgeschaltet wird.

Sobald zwischen Ritzel 5 und Lenkhandrad 7 Kräfte bzw. Drehmomente wirksam sind, wird das Servoventil 9 in der einen oder anderen Richtung aus seiner Mittellage verschoben, mit der Folge, dass zwischen den Motorleitungen 10 eine mehr oder weniger große Druckdifferenz in der einen oder anderen Richtung und damit eine mehr oder weniger große Servokraft des Kolben-Zylinder-Aggregates 4 in der einen oder anderen Richtung erzeugt und die jeweils am Lenkhandrad 7 für ein Lenkmanöver aufzubringende Kraft entsprechend vermindert wird.

Bei der erfindungsgemäßen Lenkung übernimmt das als Servomotor dienende Kolben-Zylinder-Aggregat 4 auch die Funktion eines Lenkungsdämpfers zur Dämpfung schneller Lenkwinkeländerungen der Fahrzeuglenkräder 1. Zu diesem Zweck sind an den Anschlüssen der Leitungen 10 am Kolben-Zylinder-Aggregat 4 jeweils Dämpferventile 15 angeordnet, welche in weiter unten dargestellter Weise temperaturabhängig arbeiten. In Fig. 1 sind die Dämpferventile 15 als durch eine Temperatur T steuerbare Drosseln dargestellt. Aufgrund des Drosselwiderstandes der Dämpferventile 15 werden schnelle Bewegungen des Kolbens des Kolben-Zylinder-Aggregates 4 und dementsprechend schnelle Lenkverstellungen der Fahrzeuglenkräder 1 gedämpft.

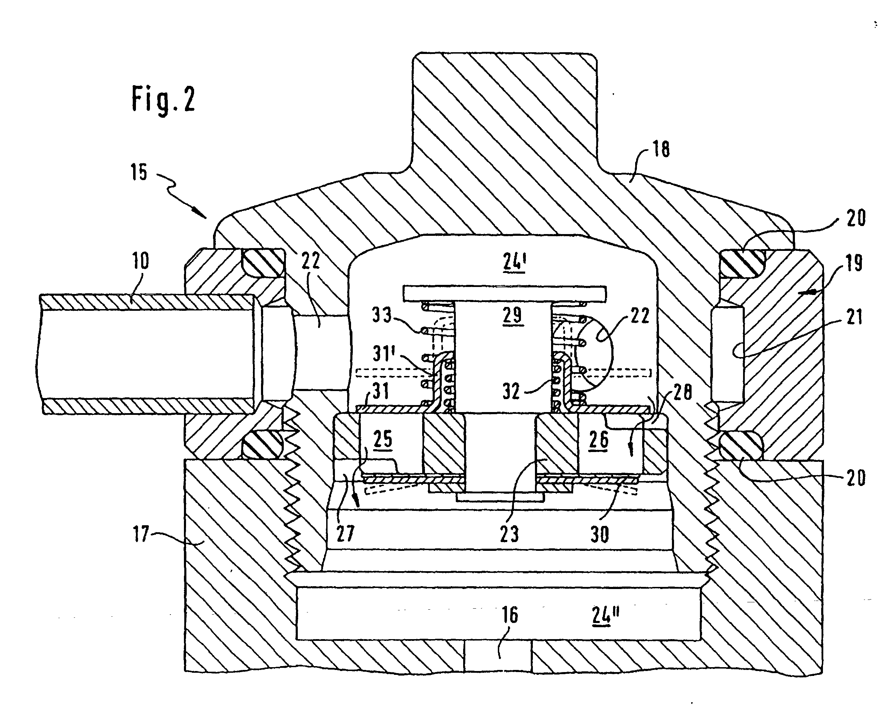

Fig. 2 zeigt nun eine erste Ausführungsform einer Dämpferventilanordnung 15.

Am Kolben-Zylinder-Aggregat 4 ist jede Kammer mit einer Anschlussöffnung 16 versehen, die innerhalb eines Innengewindeteils 17, gleichachsig zur Gewindeachse, angeordnet ist. In das Innengewindeteil 17 lässt sich ein hutförmiges Anschlussteil 18 mit einem an ihm angeordneten Außengewinde eindrehen, wobei zwischen einander gegenüberliegenden Flanschflächen am Innengewindeteil 17 einerseits und am Anschlussteil 18 andererseits ein mit der Motorleitung 10 fest verbundener Haltering 19 axial einspannbar ist und die Spalte zwischen den Stirnseiten des Halteringes 19 und den zugewandten Flanschflächen von Innengewindeteil 17 und Anschlussteil 18 durch Dichtringe 20 am Haltering 19 druckfest abgesperrt werden.

Der Haltering 19 besitzt auf seinem Innenumfang einen nach Art einer Ringnut ausgebildeten Kanal 21, welcher seinerseits mit der Motorleitung 10 und andererseits mit einer oder mehreren Radialbohrungen 22 im Anschlussteil 18 kommuniziert und damit eine Verbindung zwischen der Motorleitung und dem Innenraum des Anschlussteils 18 herstellt.

Innerhalb des Anschlussteils 18 ist ein kreisscheibenförmiges Trägerteil 23 fest und unverlierbar gehaltert, welches innerhalb des Anschlussteils 18 einen an die Radialbohrung bzw. Radialbohrungen 22 anschließenden Raum 24' von einem an die Anschlussöffnung 16 anschließenden Raum 24" abtrennt. Das Trägerteil 23 besitzt Axialbohrungen 25 und 26, wobei die Axialbohrungen 25 in eine zum Raum 24" geöffnete Vertiefung 27 auf der unteren Stirnseite des scheibenförmigen Trägerteils 23 und die Axialbohrungen 26 in eine ähnliche Vertiefung 28 auf der in Fig. 2 oberen Stirnseite des Trägerteils 23 münden.

In einer Zentralöffnung des Trägerteils 23 ist ein Bolzen 29 gehaltert, welcher auf einer Stirnseite des Trägerteils 23 - im Beispiel der Fig. 2 auf der der Anschlussöffnung 16 zugewandten Stirnseite - kreisscheibenförmige Federplatten 30 haltert und auf der anderen Stirnseite des Trägerteils 23 als Axialführung für eine Ringscheibe 31 ausgebildet ist.

Die Federplatten 30 sind so bemessen, dass sie die Axialbohrungen 26 im Trägerteil 23 zumindest weitestgehend überdecken und größere Bereiche der den Axialbohrungen 25 zugeordneten Vertiefungen 27 frei lassen. Die Ringscheibe 31 ist so bemessen, dass sie die Axialbohrungen 25 zu überdecken vermag und die den Axialbohrungen 26 zugeordneten Vertiefungen 28 zumindest bereichsweise frei lässt.

Die Ringscheibe 31 besitzt an ihrem Innenumfangsrand einen hülsenförmigen Fortsatz 31' mit einem zum Umfang des Bolzens 29 hin abgewinkelten stirnseitigen Flansch, welcher den Bolzen 29 mit geringem radialen Spiel umfasst. Im Ringraum zwischen dem hülsenförmigen Fortsatz 31' und dem Außenumfang des Bolzens 29 ist eine erste Schraubendruckfeder 32 zwischen dem Ringflansch des Fortsatzes 31 und der zugewandten Stirnseite des Trägerteils 23 eingespannt. Im übrigen ist eine weitere Schraubendruckfeder 33 zwischen der Ringscheibe 31 und der zugewandten Stirnseite eines am freien Ende des Bolzens 29 angeordneten Flansches eingespannt.

Bei normalen Betriebstemperaturen besitzt die Schraubendruckfeder 33 eine im Vergleich zur Schraubendruckfeder 32 große Spannung, so dass die Schraubendruckfeder 33 die Ringscheibe 31 gegen die Kraft der Schraubendruckfeder 32 gegen das Trägerteil 23 drängen kann.

Die Schraubendruckfeder 33 besteht aus einer Formgedächtnis-Legierung, welche ihre Federeigenschaften bei einer relativ niedrigen Sprungtemperatur deutlich ändert, derart, dass bei Unterschreitung der Sprungtemperatur nur noch eine im Vergleich zur Schraubendruckfeder 32 geringe Federspannung verbleibt und die Schraubendruckfeder 32 die Ringscheibe 31 gegen die restliche Kraft der Schraubendruckfeder 33 ständig in einer von dem Trägerteil 23 abgehobenen Lage zu halten vermag.

Die Federplatten 30 können aus normalem Federstahl oder dergleichen bestehen.

Statt dessen ist es auch möglich, die in Fig. 2 unterste Federplatte 30 oder mehrere der unteren Federplatten 30 oder alle Federplatten 30 aus Formgedächtnis-Legierung herzustellen, derart, dass die Federrate der Federplatten 30 und damit deren Steifigkeit bei Unterschreitung einer Sprungtemperatur deutlich abnehmen.

Alternativ besteht auch die Möglichkeit, zwei Federplatten 30 aus unterschiedlichen Materialien, welche sich in ihrem Ausdehnungsverhalten bei Temperaturänderungen unterscheiden, nach Art einer Bimetallfeder zu kombinieren, derart, dass eine Bimetall-Federplatte gebildet wird, welche sich mit ihrem Außenumfang bei absinkenden Temperaturen zunehmend von der zugewandten Stirnseite des Trägerteils 23 abhebt.

Die Federplatten 30 sowie die Ringscheibe 31 wirken mit den Axialbohrungen 25 und 26 und den Vertiefungen 27 und 28 als Drosseln zusammen.

Bei normalen Betriebstemperaturen werden die Ringscheibe 31 und die Federplatten 30 elastisch gegen die zugewandten Stirnseiten des Trägerteils 23 gedrängt. Im Falle einer hydraulischen Strömung vom Raum 24' zum Raum 24" muss dann das Hydraulikmedium durch einen geringen Freiraum am Außenrand der Ringscheibe 31 vorbei durch die Vertiefung 28 und die Axialbohrungen 26 hindurchströmen und die Federplatten 30 von der Unterseite des Trägerteils 23 abheben. Dadurch wird insgesamt ein recht hoher Drosselwiderstand erreicht, der zu einer entsprechenden Dämpfung der Hydraulikströmung sowie der bei dieser Strömung auftretenden Bewegung des Kolbens des Kolben-Zylinder-Aggregates 4 (vgl. Fig. 1 führt. Bei umgekehrter Strömungsrichtung muss das Hydraulikmedium am Außenrand der Federplatten 30 vorbei durch die Vertiefungen 27 sowie die Axialbohrungen 25 hindurchströmen und dabei die Ringscheibe 31 gegen die Kraft der Schraubendruckfeder 33 anheben. Hierbei tritt nur eine geringe Drosselung der Strömung auf.

Bei Unterschreitung der Sprungtemperatur hebt die Ringscheibe 31 vom Trägerteil 23 ab, so dass der Strömungswiderstand in Richtung des Raumes 24" stark vermindert wird, da auch in dieser Strömungsrichtung nunmehr die Axialbohrungen 25 geöffnet sind.

Soweit die Federplatten 30 ganz oder teilweise aus Formgedächtnis-Legierung bestehen, nimmt deren Steifigkeit bei Unterschreitung ihrer Sprungtemperatur deutlich ab, so dass bei einer Strömung vom Raum 24' zum Raum 24" von den Federplatten 30 nur ein deutlich verminderter Drosselwiderstand bewirkt werden kann.

Falls die Federplatten 30 als Bimetall-Platte ausgebildet sind, ist eine Anordnung möglich, bei der sich die Federplatten 30 bei tiefer werdender Temperatur vollständig vom Trägerteil 23 abheben, mit der Folge, dass der durch die Federplatten 30 bewirkte Drosselwiderstand bei beiden Strömungsrichtungen abnimmt.

Federelemente aus Formgedächtnis-Legierung besitzen ein "Schaltverhalten", d.h. wird die Sprungtemperatur über- oder unterschritten, so verändert sich der Zustand des Federelementes von weich nach hart bzw. umgekehrt. Im übrigen können Temperatureinflüsse weitestgehend vernachlässigt werden. Dies ist gleichbedeutend damit, dass die Schraubendruckfeder 33 aus Formgedächtnis-Legierung die Ringscheibe 31 oberhalb der Sprungtemperatur drosselwirksam "schaltet" und unterhalb der Sprungtemperatur drosselunwirksam macht. Damit wird der von der Ringscheibe 31 bewirkte Drosselwiderstand "schlagartig" zwischen stark und schwach umgeschaltet.

Bimetall-Elemente können ihre Form in einem weiten Temperaturbereich verändern, d.h. der hiervon gesteuerte Drosselwiderstand verändert sich in einem weiten Temperaturbereich.

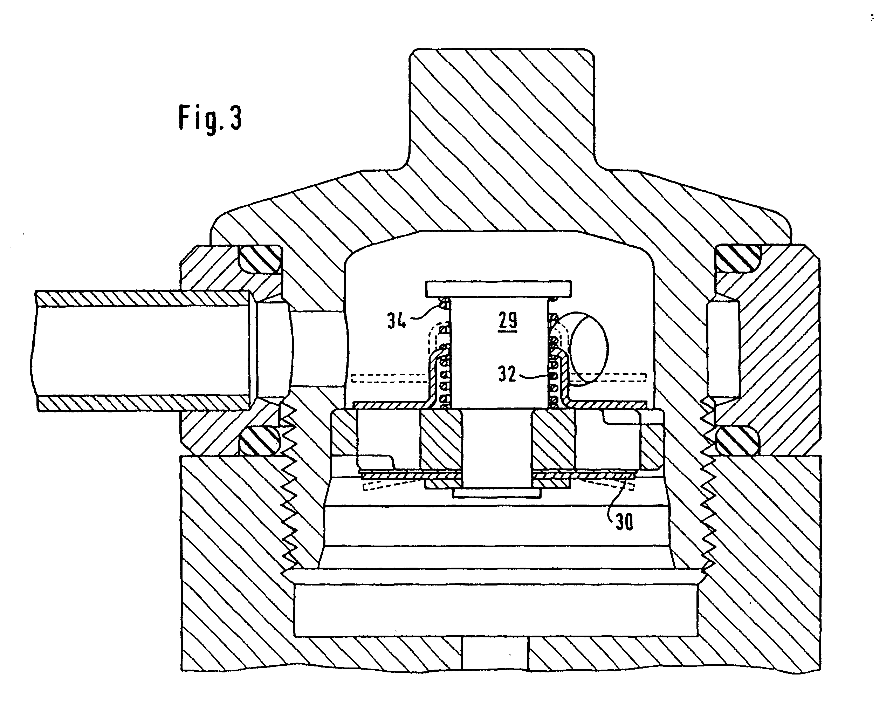

Die Fig. 3 dargestellte Ausführungsform unterscheidet sich von der Ausführungsform nach Fig. 2 lediglich dadurch, dass die Schraubendruckfeder 33 der Fig. 2 weggelassen und durch eine Schraubendruckfeder 34 ersetzt ist, die zwischen dem Ringflansch am in Fig. 3 oberen Ende des hülsenförmigen Fortsatzes 31' und dem Ringflansch am freien Ende des Bolzens 29 eingespannt ist und wiederum aus einer Formgedächtnis-Legierung besteht, derart, dass die Schraubendruckfeder 34 oberhalb einer Sprungtemperatur eine hohe und unterhalb der Sprungtemperatur eine geringe Federspannung aufweist. Damit ergibt sich ein grundsätzlich gleichartiges Betriebsverhalten wie im Falle der Fig. 2.

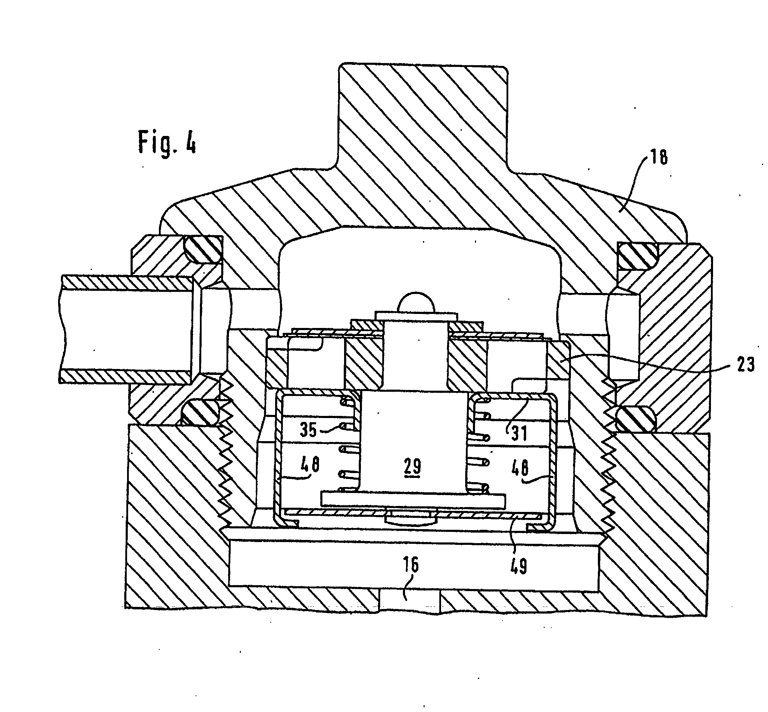

In der Fig. 4 ist zunächst dargestellt, dass sich das Trägerteil 23 mit dem Bolzen 29 auch "umgekehrt" im Anschlussteil 18 anordnen lässt, d.h. das freie Ende des Bolzens 29 ist der Anschlussöffnung 16 zugewandt.

Die Ringscheibe 31 besitzt an ihrem Außenumfang zwei schmale bügelförmige Arme 48 mit hakenartig abgewinkelten Enden, welche eine am freien Ende des Bolzens 29 angeordnete Bimetallscheibe 49 umgreifen.

Bei höherer Temperatur nimmt die Bimetallscheibe 49 ihren ungewölbten, scheibenförmigen Zustand ein. In diesem Fall kann die Schraubendruckfeder 35 die Ringscheibe 31 gegen das Trägerteil 23 drängen, und zwischen den hakenförmigen Enden der Arme 48 und der Bimetallscheibe 49 verbleibt noch ein geringes axiales Spiel. Sobald die Temperatur hinreichend absinkt, nimmt die Bimetallscheibe 49 ihren gewölbten Zustand mit der Anschlussöffnung 16 zugewandter Konkavseite ein, mit der Folge, dass die Ringscheibe 31 mittels ihrer Arme 48 gegen die Kraft der Schraubendruckfeder 35 von dem Trägerteil 23 weggezogen und mit axialem Abstand von dem Trägerteil 23 gehalten wird.

Abweichend von den obigen Ausführungen können die Dämpferventile 15 auch am Gehäuse des Servoventils 9 angeordnet sein, so dass sie mit dem Servoventil ein komplett vormontierbares Ventilmodul bilden.

Dabei kann gemäß einer ersten Variante vorgesehen sein, die Dämpferventile in oben dargestellter Weise in hohlschraubenartigen Anschlussteilen an entsprechenden Anschlüssen des Servoventilgehäuses unterzubringen.

Statt dessen ist es auch möglich und vorteilhaft, die dämpfungswirksamen Elemente in Gehäusebohrungen des Servoventilgehäuses unterzubringen.

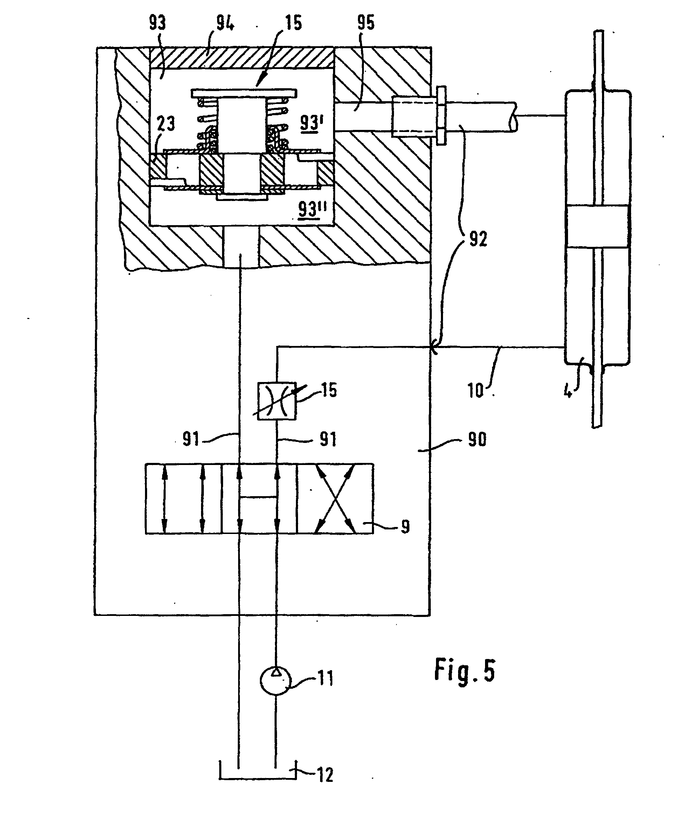

Fig. 5 zeigt eine hierfür konstruktiv zweckmäßige Ausgestaltung.

Das Servoventil 9 ist in einem Gehäuse 90 untergebracht, welches in Fig. 10 teilweise schematisch und teilweise ausschnittsweise geschnitten dargestellt ist.

Ausgangsseitig des Servoventils 9 sind zwei als Gehäusebohrungen ausgebildete Kanäle 91 vorgesehen, die jeweils über eine der Dämpferventilanordnungen 15 mit einem Anschluss 92 für die zum Servomotor 4 führenden Leitungen 10 verbunden sind. Jeder vom Servoventil 9 kommende Teil der Kanäle 91 erweitert sich innerhalb des Gehäuses 90 stufenförmig in eine Kammer 93, welche kreisförmigen Querschnitt aufweist und auf der quer zur Achse der Kammer 93 erstreckten Außenseite des Gehäuses 90 durch einen beispielsweise eingepressten Deckel 94 abgesperrt ist. Jede Kammer 93 wird durch ein darin eingepresstes Trägerteil 23 in einen Teilraum 93' und einen Teilraum 93" unterteilt. Vom Teilraum 93' zweigt eine zum jeweiligen Anschluss 92 führende Querbohrung 95 ab. Das Trägerteil 23 besitzt eine Ausbildung entsprechend einer der Fig. 2 bis 8, so dass auf die entsprechenden Teile der Beschreibung verwiesen werden kann, wobei das Trägerteil 23 in gleicher Weise wie in den vorgenannten Figuren mit dämpfungswirksamen Elementen bestückt ist.

Die Ausführungsform nach Fig. 5 kann unter Kostengesichtspunkten vorteilhaft sein, weil am Gehäuse 90 des Servoventils 9 lediglich zusätzliche Bohrungen u.dgl. vorhanden und die Form des Gehäuses lediglich für die Anordnung der zusätzlichen Bohrungen u.dgl. bemessen sein müssen. Gegenüber den Ausführungsformen der Fig. 2 bis 4 kann insbesondere das vergleichsweise aufwendige Anschlussteil 18 erübrigt werden. Im übrigen können die Motorleitungen 10 herkömmliche Anschlussteile besitzen.

## Patentansprüche

1. Hydraulische Servolenkung, deren als hydrostatisches Motoraggregat bzw. als hydraulisches Verdrängeraggregat ausgebildeter Servomotor (4) auch als Lenkungsdämpfer wirkt, indem an Hydraulikleitungen (10) zwischen Servomotor (4) und Servoventil (9) Dämpferventilanordnungen (15) vorgesehen sind, welche ein kreisscheibenförmiges Trägerteil (23) mit Axialbohrungen (25,26) und einem zentralen Bolzen (29) aufweisen, der einerseits kreisscheibenförmige Federplatten (30) zur Steuerung eines Teils der Axialbohrungen (26) haltert und andererseits, auf der von den Federplatten (30) abgewandten Seite des Trägerteils (23), eine Ringscheibe (31) zur Steuerung des anderen Teils der Axialbohrungen (25) führt,
**dadurch gekennzeichnet,**
**dass** die Ringscheibe (31) von zwei Federn (32,35;33,34;49) in einander entgegengesetzten Richtungen beaufschlagt wird, wobei die eine Feder (33,34;49) temperaturabhängig arbeitet, so dass die Ringscheibe (31) unterhalb einer vorgegebenen Temperatur in eine vom Trägerteil (23) abgehobene Lage gedrängt wird.

2. Hydraulische Servolenkung nach Anspruch 1,
**dadurch gekennzeichnet,**
**dass** die Federn als Schraubendruckfedern (32;33,34) ausgeführt sind, wobei die eine Schraubendruckfeder (33,34) aus einer Formgedächtnislegierung besteht und die Ringscheibe (31) oberhalb einer Sprungtemperatur gegen das Trägerteil (29) drückt und damit drosselwirksam macht.

3. Hydraulische Servolenkung nach Anspruch 1,
**dadurch gekennzeichnet,**
**dass** eine Bimetallscheibe (49) bei tiefer Temperatur die Ringscheibe (31) gegen die Kraft einer temperaturunabhängigen Feder (35) in eine Offenlage zieht.

4. Hydraulische Servolenkung nach einem der vorhergehenden Ansprüche,
**dadurch gekennzeichnet,**
**dass** die Federplatten (30) zumindest teilweise ein Material mit Formgedächtnis-Legierung und/oder Materialen, die zusammen einen Bimetalleffekt bewirken, aufweisen, so dass die Federrate der Federplatten (30) bei Unterschreitung einer Sprungtemperatur deutlich abnimmt.

5. Hydraulische Servolenkung nach einem der vorhergehenden Ansprüche,
**dadurch gekennzeichnet,**
**dass**
- die Dämpferventilanordnung (15) in miteinander verschraubten Anschlussteilen (17,18) angeordnet ist, die die Leitungen (10) mit dem Gehäuse von Servomotor bzw. Servoventil verbinden und
- zwischen den Anschlussteilen (17,18) ein Haltering (19) für die jeweilige Leitung (10) eingespannt ist.

6. Hydraulische Servolenkung nach einem der Ansprüche 1 bis 3,
**dadurch gekennzeichnet,**
**dass** die Dämpferventilanordnungen (15) in Gehäusebohrungen (91) des Servoventils (9) angeordnet sind, die über die Dämpferventilanordnungen (15) jeweils mit einem Anschluss (92) für die zum Servomotor (4) führenden Leitungen (10) kommunizieren.

## Claims

1. A hydraulic power-assisted steering device having a servo motor (4) designed as a hydrostatic motor unit or a hydraulic positive displacement unit which also acts as a steering damper, in which damper valve arrangements (15) which are provided on hydraulic lines (10) between servo motor (4) and servo valve (9) each have a circular disc-shaped carrier part (23) with axial holes (25, 26) and a central bolt (29) which, on one hand, holds circular disc-shaped spring plates (30) for controlling a part of the axial holes (26) and, on the other, holds a ring-shaped disc (31) for controlling the other part of the axial holes (25) on the side of the carrier part (23) facing away from the spring plates (30),
**characterised in that**
pressure is applied to the ring-shaped disc (31) in opposite directions by two springs (32, 35; 33, 34; 49), one spring (33, 34; 49) operating dependent on temperature in such a manner that the ring-shaped disc (31) is forced into a position raised off the carrier part (23) below a predetermined temperature.

2. A hydraulic power-assisted steering device in accordance with claim 1,
**characterised in that**
the springs are designed as screw compression springs (32; 33, 34), one screw compression spring (33, 34) consisting of a shape memory alloy and pressing the ring-shaped disc (31) against the carrier part (29) above a transition temperature, thereby giving it a throttle effect.

3. A hydraulic power-assisted steering device in accordance with claim 1,
**characterised in that**
at low temperature the a bimetal disc (49) draws the ring-shaped disc (31) into an open position against the force of a temperature-dependent spring (35).

4. A hydraulic power-assisted steering device in accordance with one of the preceding claims,
**characterised in that**
the spring plates (30) are made at least partially of a material with shape memory alloy and/or materials which together produce a bimetallic effect so that the spring rate of the spring plates (30) drops significantly when the temperature falls below a transition temperature.

5. A hydraulic power-assisted steering device in accordance with one of the preceding claims,
**characterised in that**
- the damper valve arrangements (15) are positioned in connecting parts (17, 18) which are screwed together and which connect the lines (10) to the housing of the servo motor and servo valve and
- a retaining ring (19) for each line (10) is held between the connecting parts (17, 18).

6. A hydraulic power-assisted steering device in accordance with one of claims 1 to 3,
**characterised in that**
the damper valve arrangements (15) are positioned in housing holes (91) in the servo valve (9) which communicate with connections (92) for the lines (10) leading to the servo motor (4) via the damper valve arrangements (15).

## Revendications

1. Direction assistée hydraulique dont le servomoteur (4) configuré comme élément moteur hydrostatique ou comme élément de refoulement hydraulique agit aussi comme amortisseur de direction par le fait que, sur des conduites hydrauliques (10) entre le servomoteur (4) et la servovanne (9), sont prévus des ensembles de vannes d'amortissement (15), qui comprennent une partie de support en forme de disque circulaire (23) avec des forures axiales (25, 26) et un pivot central (29), qui maintient d'une part des membranes élastiques en forme de disques circulaires (30) pour la commande d'une partie des forures axiales (26) et qui guide d'autre part sur le côté de la partie de support (23) opposé aux membranes élastiques (30) un disque circulaire (31) pour la commande de l'autre partie des forures axiales (25), **caractérisé en ce que** le disque circulaire (31) est soumis dans des directions opposées l'une à l'autre à l'action de deux ressorts (32, 35 ; 33, 34 ; 49), l'un des ressorts (33, 34 ; 49) agissant en fonction de la température, de sorte qu'en dessous d'une température imposée, le disque circulaire (31) est poussé dans une position détachée par rapport à la partie de support (23).

2. Direction assistée hydraulique selon la revendication 1, **caractérisée en ce que** les ressorts sont réalisés comme ressorts hélicoïdaux de compression (32 ; 33, 34), l'un des ressorts hélicoïdaux de compression (33, 34) se composant d'un alliage à mémoire de forme et le disque circulaire (31) appuyant au-delà d'une température de changement brusque sur la partie de support (29) en lui conférant ainsi une activité d'étranglement.

3. Direction assistée hydraulique selon la revendication 1, **caractérisée en ce que** sous l'action d'une température basse un disque à bimétal (49) tire le disque circulaire (31) dans une position ouverte contre la force d'un ressort indépendant de la température (35).

4. Direction assistée hydraulique selon l'une quelconque des revendications précédentes, **caractérisée en ce que** les membranes élastiques (30) contiennent au moins partiellement un matériau avec un alliage à mémoire de forme et/ou des matériaux qui produisent ensemble un effet de bimétal, de sorte que le coefficient d'élasticité des membranes élastiques (30) diminue nettement en cas de dépassement vers le bas d'une température de changement brusque.

5. Direction assistée hydraulique selon l'une quelconque des revendications précédentes, **caractérisée**
- **en ce que** l'ensemble de vannes d'amortissement (15) est disposé dans des pièces de raccordement vissées entre elles (17, 18), qui relient les conduites (10) avec le boîtier du servomoteur ou de la servovanne et
- **en ce qu'**entre les pièces de raccordement (17, 18) est enserrée une bague de maintien (19) pour la conduite respective (10).

6. Direction assistée hydraulique selon l'une quelconque des revendications 1 à 3, **caractérisée en ce que** les ensembles de vannes d'amortissement (15) sont disposés dans des forures de boîtier (91) de la servovanne (9) qui, par l'intermédiaire des ensembles de vannes d'amortissement (15), communiquent respectivement avec un raccord (92) pour les conduites (10) conduisant au servomoteur (4).
